# EUROPEAN PATENT APPLICATION

(11) **EP 1 235 365 A1**
(43) Date of publication of application: **28.08.2002**
(21) Application number: 01974811.0
(22) Date of filing: 12.10.2001
(51) Int. Cl.: H04B 7/26

(54) **RADIO COMMUNICATION APPARATUS, RADIO COMMUNICATION SYSTEM AND COMMUNICATION APPARATUS**

(30) Priority: 23.10.2000 JP 2000322444
(71) Applicant: Yozan Inc., Tokyo 155-0031 (JP)
(72) Inventor: ZHOU, Changming, YOZAN INC., Tokyo 155-0031 (JP); KIYOMATSU, Hisanori, YOZAN INC., Tokyo 155-0031 (JP)
(74) Representative: Schmidt, Steffen J., Dipl.-Ing.
(86) International application number: JP0108966
(87) International publication number: WO02035736

(57) **Abstract**

A radio telecommunication apparatus 1 is provided with a pager receiver 2, cellular radio device 3, and a control portion 4 for controlling the entire apparatus and supplying power to the cellular radio device 3 according to a message received through the radio calling system. When located within an area of a radio calling system, the portable terminal 1 performs location registration to the radio calling system through the cellular system, disconnects power to the cellular radio device 3, and enters the radio calling standby state. When there is an incoming call to the cellular radio device 3, that portable terminal is called through the radio calling system and the power is turned on to the cellular radio device 3.

## Description

### TECHNICAL FIELD

The present invention relates to a radio telecommunication apparatus provided with a cellular system radio device and a receiver for a radio calling system, and a radio telecommunication system and telecommunication apparatus using that radio telecommunication apparatus.

### BACKGROUND ART

In mobile telecommunications, a radio calling system (paging system, Pocket-Beeper) capable of sending short text messages covers the greatest area. The radio calling system may service large areas, such as regional services generally on the prefectural and city levels, wide area services, and multi-area services. Normally one radio calling central station and a plurality of radio calling base stations are established in the service area of a radio calling system. When a caller dials the calling number of a radio calling receiver (pager receiver), the caller connected to the radio calling apparatus in the radio calling central station. The radio calling apparatus sends the address signal identifying the corresponding pager receiver and the input message signal to each radio calling base station. The signal sent to each radio calling base station is converted to a radio signal and sent simultaneously from the station on one radio frequency. If a pager receiver finds its own address signal in the received selection calling signal, the receiver rings, decodes the message signal, and displays the contents.

Also, intermittent receiving is generally adopted in order to reduce power consumption by the pager receiver. Consequently, existing radio calling utilize the of intermittent receiving to a considerable extent and the pager receiver has very low power consumption.

Moreover, in such a radio calling system, it is necessary for the user to register his or her location because the pager receiver cannot send any data or messages. When the user is moving into a new area, he or she uses a telephone, calls a registration number, and inputs his or her own calling number and the number of the new area to which the user wants to go. The information on the area to which message are to be transferred is thereby stored in the central station.

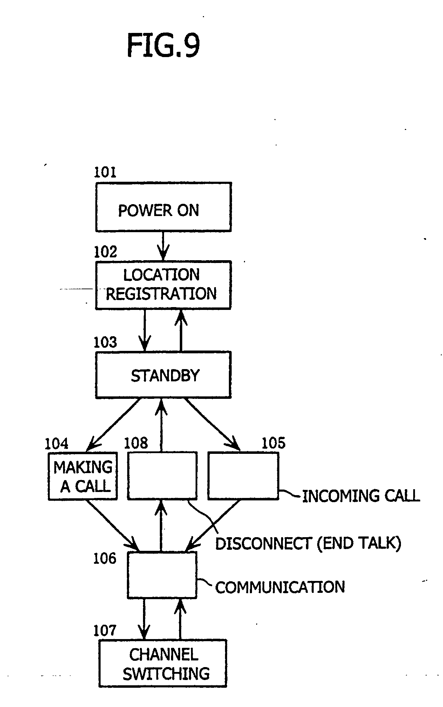

Meanwhile, cellular systems are expanding at a very high speed. The basic signaling function of the portable telephones (portable terminals) in the cellular systems will be explained with reference to the flow chart in Figure 9.

When the portable terminal is powered on in Step 101, location registration 102 is performed. The location of the portable terminal is registered on the network system in order to make it possible for the network system to give notification of incoming calls, no matter where the portable terminal is. When the location (area) information broadcasted through the broadcast control channel changes, the portable terminal automatically performs location registration.

After location registration 102, the portable terminal changes to a standby state 103. In a cellular system, it becomes possible for the portable terminal to have intermittent reception with the provision of a paging channel (PCH or broadcast calling channel). In this standby state 103, the portable terminal synchronizes with each of the associated broadcast calling channels and performs intermittent reception. When the broadcast calling channel is not being received, the power is not supplied to the radio portion of the portable terminal and power consumption can be made very low.

When the send button or the like is operated and a call is initiated, the terminal enters the calling state 104. The portable terminal sends a call signal to a base station, receives a communication channel allocation, transitions to the communicating state 106, and performs communication. Upon receiving an incoming call signal through the broadcast calling channel, the terminal enters the incoming call state 105, responds to the call, changes to the indicated voice channel, and transitions to a talking state 106. Also, in the case of crossing a cell boundary during a call, channel switching 107 is performed. When the call ends, the disconnection procedure 108 is performed, and the terminal returns to the standby state 102.

According to the third generation mobile communications system (IMT-2000), a global standard communications system will integrate low-speed communications such as pagers (Pocket-Beeper) to high-speed image communications such as video-on-demand services. In such an era of multimedia telecommunication, high-speed data communications will become possible and therefore various uses of portable-telephones are being considered, such as installation of portable telephones as modems in various types of household electronics products or information terminals.

Conventional portable terminals (portable telephones) operate as discussed above. However, in the standby state 103, the terminals must receive paging information from base stations. In order to demodulate the paging information, additional time is required to stabilize the reception circuit separately from the time period used for signal reception. The power consumption during the standby of portable terminals in this cellular system becomes much greater than that of the radio calling system receivers. Further increases to the functions of portable terminals are being considered, but there are limitations to battery capacity and the possible standby time would then become even shorter.

Also, in next generation portable telephone systems with which multimedia communications is possible, a problem is that the system capacity drops when location registration is performed by each terminal, which is in the standby mode like the portable telephones discussed above. Specifically, when established location registration areas are too small, the data traffic for location registration expands and puts pressure on the control capacity on the base station side. Also, normally the location registration request signal is a random access signal and therefore, when location registration operations occur frequently, the transmission efficiency of the control channel drops rapidly.

It is an object of the present invention to provide a radio telecommunication apparatus which can reduce power consumption during the standby mode of the portable terminal, and a radio telecommunication system and telecommunication apparatus using such radio telecommunication apparatus.

Also, it is another object to provide a radio telecommunication system which can prevent a drop in system capacity resulting from location registration or the like.

### DISCLOSURE OF THE INVENTION

In order to achieve the objects, the radio telecommunication apparatus relating to the present invention comprises: a cellular system radio device; a radio calling system receiver; and a power control portion for controlling on and off of power to the cellular system radio device and the radio calling system receiver; wherein the power control portion powers on the cellular system radio device according to a signal received through the radio calling system by the radio calling system receiver.

Also, another radio telecommunication apparatus relating to the present invention is a radio telecommunication apparatus comprising a cellular system radio device and a radio calling system receiver; wherein, when located in a service area of a radio calling system, power to the cellular system radio device is turned off after area registration is performed to the radio calling system through the cellular system, and the cellular system radio device is powered on when informed of an incoming call in the cellular system through the radio calling system.

Furthermore, the radio telecommunication system relating to the present invention comprises: a control station having the functions of a control station for the cellular system and the functions of a central station for a radio calling system; cellular system base stations; radio calling system base stations; and a mobile radio telecommunication apparatus which contains a cellular system radio device and a radio calling system receiver; and the radio telecommunication system is adopted so that the control station determines whether a radio telecommunication apparatus has carried out area registration to the radio calling system when there is an incoming call to the cellular system radio device of the radio telecommunication apparatus; and when registered, the radio telecommunication apparatus is called through the radio calling system; when not registered, a call is to be made from the cellular system; and when the radio telecommunication apparatus is located in the service area of the radio calling system, the radio telecommunication apparatus cuts power to the cellular system radio device after performing area registration to the radio calling system through the cellular system and enters into a standby state in the radio calling system.

Furthermore, the control station stores the correspondence between areas for the radio calling system and cells for the cellular system; and the control station is adopted so that area registration of the radio telecommunication apparatus to the radio calling system is executed automatically in the control station, from the results of location registration of the radio telecommunication apparatus to the cellular system and by referencing the correspondence between the areas in the radio calling system and the cells in the cellular system.

Furthermore, the control station is adopted so as to send paging information through the radio calling system to the radio telecommunication apparatus when calling the radio telecommunication apparatus from the radio calling system.

Furthermore, the radio telecommunication system relating to the present invention comprises: means for storing a correspondence table of the numbers of the cellular system radio devices and numbers for radio calling system receivers with each cellular system radio device and each radio calling system receiver being installed in one radio telecommunication apparatus; and a control portion; and the radio telecommunication system is adopted so that when communication was not possible when the cellular system radio device was called, the control portion sends a message giving instructions for turning on the cellular system radio device to the radio calling system receiver, and makes a call to the cellular system radio device once more after a prescribed period of time.

### BRIEF DESCRIPTION OF THE DRAWINGS

Figure 1 is a schematic of drawing of a radio telecommunication apparatus relating to the present invention;
Figure 2 is a block diagram showing an example of the constitution of a radio telecommunication device relating to the present invention;
Figure 3 is a drawing to explain the radio telecommunication system relating to the present invention;
Figure 4 is an operating state transition drawing to explain the operation of the radio telecommunication apparatus relating to the present invention;
Figure 5 is a drawing to explain the operation of the control station in the radio telecommunication system relating to the present invention;
Figure 6 is a drawing to explain another example of the operation of the control station in the radio telecommunication system relating to the present invention;
Figure 7 is a drawing to explain the phone book information stored in the communications terminal relating to the present invention;
Figure 8 is a flowchart to explain the operation of the communications terminal relating to the present invention; and
Figure 9 is an operating state transition drawing to explain the operation of a conventional portable terminal (portable telephone).

### BEST MODE FOR CARRYING OUT THE INVENTION

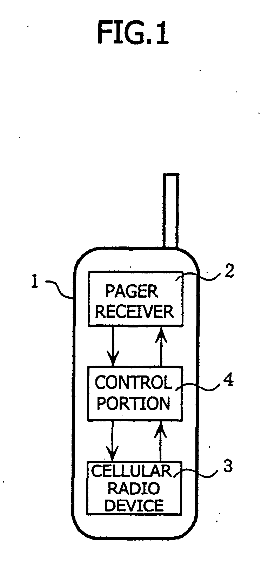

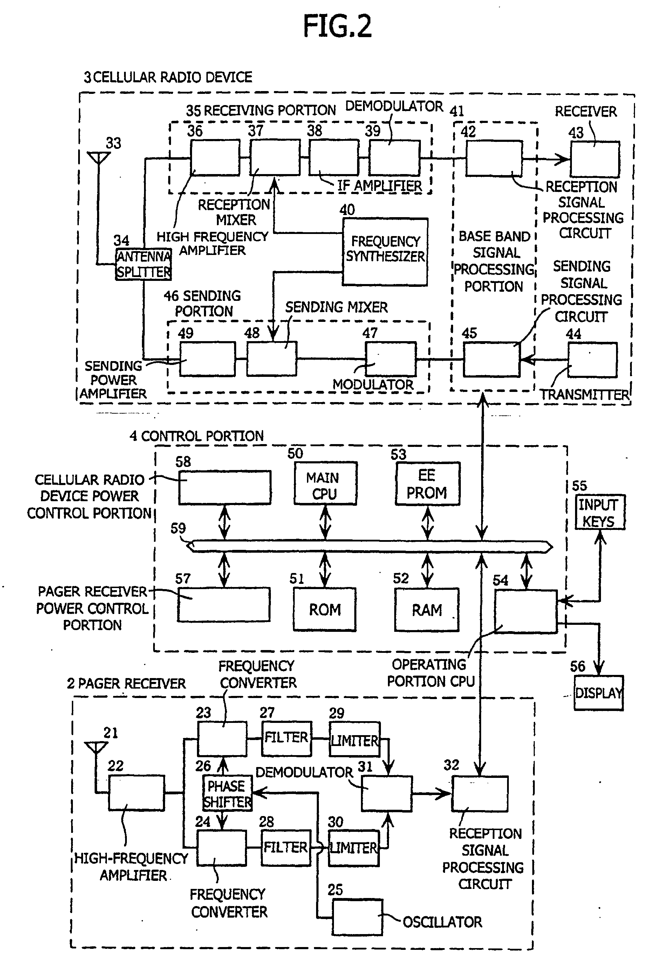

The best mode for carrying out the radio telecommunication apparatus according to the present invention is explained with reference to the schematic drawing in Figure 1 and the block diagram in Figure 2.

As shown in Figure 1, the radio telecommunication apparatus (portable terminal) 1 according to the present invention comprises a radio calling system receiver (pager receiver) 2, a cellular system radio device (cellular radio device) 3, and a control portion 4 for controlling the radio telecommunication apparatus 1 as a whole and controlling on and off of the power to the pager receiver 2 and cellular radio device 3. The apparatus is constituted so that the cellular radio device 3 can be powered on in response to a signal sent through the radio calling system.

The wireless telecommunication apparatus 1 according to the present invention is explained in detail with reference to Figure 2.

A signal from the radio calling base station received with the antenna 21 of the pager receiver 2 is amplified with a high frequency amplifier 22, and is then split in two and input to the frequency converting portions 23 and 24. To each of the frequency converting portions 23 and 24, a locally generated signal of a frequency equal to the carrier signal frequency from the oscillator 25 with a 90 degree phase difference is provided through the phrase shifter 26. The output converted to base band from each of the frequency converting portions 23 and 24 is then input to the demodulator 31 through filters 27 and 28 and limiters 29 and 30 respectively, and then demodulated. This demodulated signal is provided to the reception signal processing circuit 32, and the message signal thereof is decoded when its own address signal is detected. The decoded message signal is provided to the control portion 4, and displayed on the display 56 in the case where it is a normal reception message in the paging system. Also, when this is a message giving instructions to turn on the cellular radio device 3, power is turned on to the cellular radio device 3 by the cellular radio device power control portion 58 of the control portion 4. In this case, a direct conversion system as discussed above is used for the pager receiver 2, but a super heterodyne system may also be used.

In the cellular radio device 3, a signal from the cellular base station received with the antenna 33 is input to the receiving portion 35 through the antenna splitter 34. Then, high frequency amplification with the high frequency amplifier 36, this signal undergoes frequency conversion with the locally generated signal from the frequency synthesizer 40 in the reception mixer 37, and is demodulated by the demodulator 39 through the intermediate frequency amplifier 38. A demodulated reception signal for itself undergoes signal processing by the reception signal processing circuit 42 of the processing portion 41, and is output to the receiver 43, or is output to the display 56 through the control portion 4.

Meanwhile, a voice signal from the transmitter 44 or input data from the control portion 4 undergoes signal processing in the sending signal processing circuit 45 and is then input to the sending portion 46. In other words, the output signal of the sending signal processing circuit 45 undergoes prescribed modulation processing in the modulator 47, and then is converted to a high frequency signal with the sending mixer 48 to which is provided a signal from the high frequency synthesizer 40. The converted high frequency signal is power amplified with the sending power amplifier 49, and is then sent through the antenna splitter 34 from the antenna 33 to the cellular base station.

The control portion 4 includes the following: a main central processing unit (main CPU) 50 for performing control of the entire radio telecommunication apparatus 1; ROM 51 storing control programs, prescribed constants, and so forth; RAM 52 used as the work area; Electrically Erasable Programmable ROM (EEPROM) 53 such as flash memory storing various parameters and tables; an operating portion CPU 54 connected to input keys 55 and the display 56, and performing data input from the input keys 55 and data output to the display 56; a pager receiver power control portion 57 controlling on and off of the power to the pager receiver 2; and a cellular radio device power control portion 58 controlling on and off of of the power to the cellular radio device 3. These various constitutional elements, the reception signal processing circuit 32 for the pager receiver, as well as the base band signal processing portion 41 of the cellular radio device are connected together with a bus 59.

The control portion 4 carries out control such as control of the sending and receiving sequence operations in the pager receiver 2 and the cellular radio device 3, and control of the modulation and demodulation of the sending and receiving control signal and control of sending and receiving protocols. In addition, as discussed above, the control portion 4 performs control of the following: processing to display received messages of the paging system and information received with the cellular radio device, or various types of information for the operator with the display 56; processing to output data input from the input keys 55 to the base band signal processing portion 41 of the cellular radio device; processing for the pager receiver power control portion 57 and the cellular radio device power control portion 58; processing to power on the cellular radio device 3 through the cellular radio device power control portion 58 when a message is received instructing supply of power to the cellular radio device 3; and control of all other operations of the radio telecommunication apparatus.

A correspondence table between the areas in the paging system and every cell in the cellular system (or location registration areas) is stored in the ROM 51 or the EEPROM 53.

In this way, the radio telecommunication apparatus 1 according to the present invention comprises a pager receiver 2, cellular radio device 3, and power control portion (57 and 58) controlling on and off of power thereto; and is able to turn on the cellular radio device 3 in response to a message sent through the paging system. Consequently, as discussed below, it becomes possible to perform the standby operation using only the pager receiver 2, having very low power consumption, and to turn on the cellular radio device 3 as necessary; and it becomes possible to reduce power consumption greatly during standby.

A radio telecommunication system, relating to the present invention and including this type of radio telecommunication apparatus relating to the present invention, will be explained next.

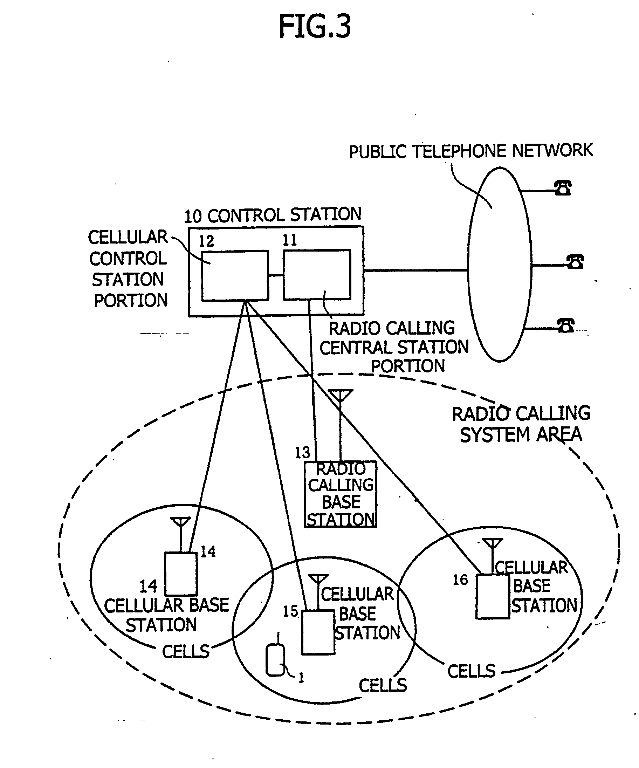

Figure 3 is a drawing showing a schematic of the entire radio telecommunication system relating to the present invention. In Figure 3, the radio telecommunication apparatus (portable terminal) 1 relating to the present invention contains a pager receiver 2 and cellular radio device 3 as discussed above.

A radio calling central station 11, having the function of a central station of the radio calling system (paging system), and a cellular system control station portion 12, having the function of the control station in a cellular system, are both established in the control station 10 and connected to the public network. The radio calling central station portion 11 is connected to the radio calling base station 13, and the cellular system control station 12 is connected to the cellular base stations 14, 15, and 16. Also, a correspondence table for the telephone numbers of the pager receivers (pager receiver number) and those of the cellular radio devices (cellular radio device number), installed in the portable terminals 1, is prepared in the control station 10, along with a correspondence table of the paging system service areas and every the cellular system cell (or location registration areas). Moreover, in this drawing, only one radio calling base station is shown for brevity.

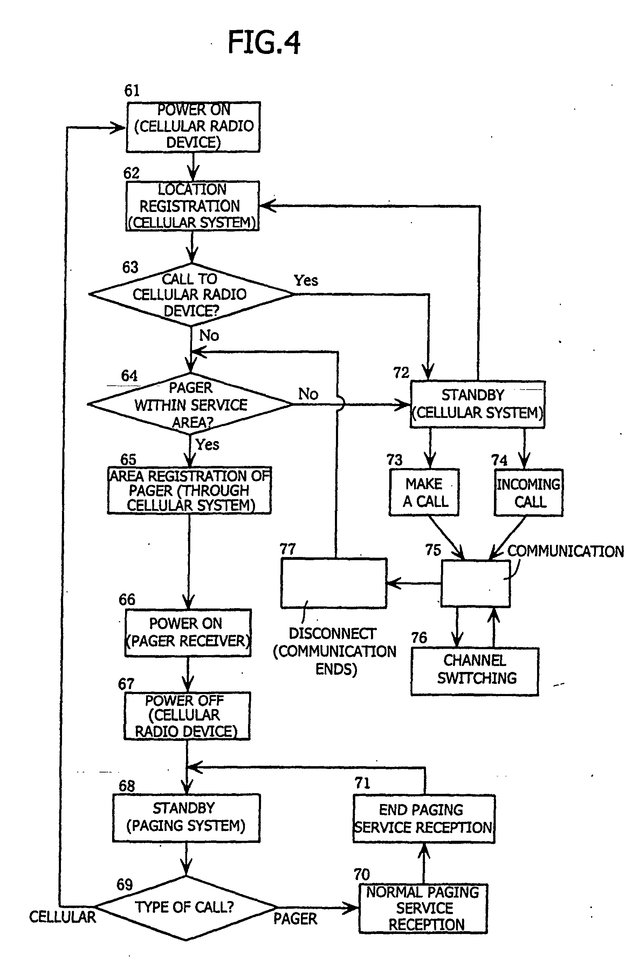

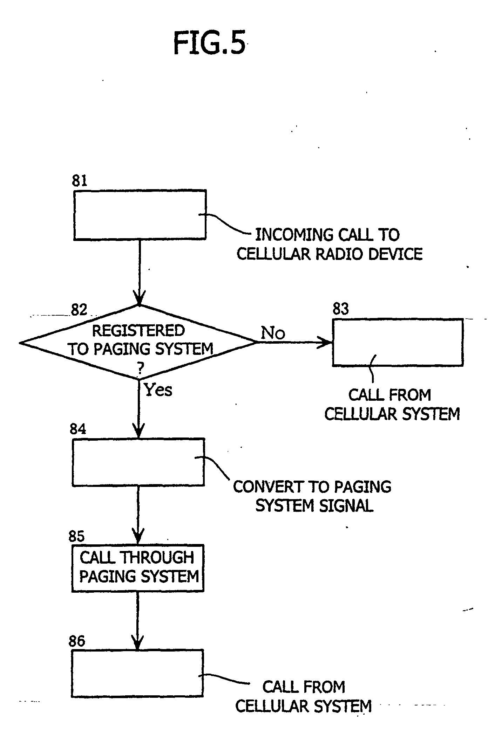

The operation of the radio telecommunication system and radio telecommunication apparatus constituted in this way is explained with reference to the operating state transition drawing of the radio telecommunication apparatus 1 shown in Figure 4 and the operation flowchart for the control station 10 when there is an incoming call to the cellular radio device 3 shown in Figure 5.

As shown in Figure 4, when the operation of the radio telecommunication apparatus 1 according to the present invention is started, power is turned on to the cellular radio device 3 (61), and then location registration to the cellular system is performed (62). It is then determined whether there is a call to the cellular radio device through the paging system (63). Immediately after power is turned on, the result of this determination is NO.

Next it is determined whether the current location is within a service area of the paging system (64). The determination is made by referencing the correspondence table for the areas of the paging system and the cells of the cellular system stored in the ROM 51 or the EEPROM 53.

When the result of this determination is that the current location is not within any service area of the paging system, the terminal transitions to the cellular system standby state (72). The same type of signaling function as the normal cellular system shown in Figure 9 is executed. Specifically, the terminal switches to a communicating state (75) due to making a call (73) or receiving a call (74), and switches channels (76) upon moving between cells, or the like. At the end of communication (77), the process returns to the determination of whether the current location is within a service area of the paging system (64).

Meanwhile, in the case where the current location is within a service area of the paging system, the area registration to the paging system is performed (65). This area registration is made through the cellular system by means of the cellular radio device 3. Specifically, the control portion 4 provides the area registration signal for the radio calling central station portion 11 to the base band signal processing portion 41 of the cellular radio device 3, and sends this signal via the cellular radio device 3. The area registration signal, received by the cellular base station and sent to the cellular system control station portion 12, is notified from the cellular control station portion 12 to the radio calling central station portion 11. In this way, the area registration to the paging system is performed automatically through the cellular system.

As discussed above, the area registration signal is sent from the portable terminal 1 to the central station of the paging system and the area registration is performed. However, the area registration may also be performed automatically in the control station 10, using the correspondence table of the paging system areas and the cellular system cells stored in the control station 10. Specifically, when location registration (62) to the cellular system is performed, the correspondence table of the areas and cells, and the correspondence table of the cellular radio device numbers and pager receiver numbers are referenced and the pager receiver number is automatically registered to the area corresponding to the cell for which location registration (62) was performed.

Next, power is turned on to the pager receiver (66) by the pager receiver power control portion 57 and power is turned off (67) to the cellular radio device by the cellular radio device power control portion 58. The terminal is then in the paging system standby state (68).

When a call comes through the paging system in this standby state (68), the type of call (type of message) is determined (69). When the call is a normal call from the paging service, normal paging service reception is performed (70). After reception ends (71), the terminal switches to the paging system standby state (68). Meanwhile, when the call is a call to the cellular radio device (request for incoming call to cellular radio device, message giving instructions to power on the cellular radio device 3), the cellular radio device is powered on (61) and performs location registration (62). When the call is a call to the cellular radio device (63), the terminal switches to cellular system standby (72), receives the broadcast calling channel and receives the call signal for itself (74), and sends a response signal to the call, and then the terminal communicates on the designated communication channel (75). As necessary, channel switching (76) is performed and at the end of the communication (77), the process returns to the determination (64) of whether the current location is in the paging system service area.

As shown in Figure 5, in the case of an incoming call to the cellular radio device (81), it is determined in the control station 10 whether this cellular radio device has finished the area registration to the paging system (82). As discussed above, the radio telecommunication apparatus 1 according to the present invention is adopted so as to automatically perform the area registration with respect to the service area through the cellular system when located within the paging system service area. In the control station 10, the correspondence table for pager receiver numbers and cellular radio device numbers is referenced, and the pager receiver number corresponding to the cellular radio device for which there is an incoming call is learned. In the radio calling central station portion 11, it is determined whether that pager receiver has finished the area registration with the paging system. As a result, when the pager receiver having the number corresponding to the cellular radio device member for which there is an incoming call has not undergone the area registration with the paging system, a call is made to the cellular system (83), like for the normal cellular system. In this case, the subsequent operations become the same as for the normal cellular system.

Meanwhile, if the device has finished the area registration, the incoming call signal for the cellular radio device is converted to a paging system signal (84) (address signal for the corresponding pager receiver and message instructing supply of power to the cellular radio device 3), and a call is made through the paging system. Specifically, the radio calling central station portion 11 sends information indicating that there is an incoming call to the cellular radio device (or a message instructing supply of power to the cellular radio device 3) (85) to the pager receiver, corresponding to the cellular radio device for which there is an incoming call, through the paging base station 13. The cellular radio device 3 in the portable terminal 1 is thereby powered on; the cellular radio device 3 performs an initial cell search and location registration, and initiates broadcast calling channel reception.

Next, the cellular control station portion 12 performs calling of the cellular radio device through the broadcast calling channel of the cellular system as well (86).

The cellular radio device 3 thereby receives the broadcast calling channel, receives the incoming call signal to itself, and allows to perform communication.

The operation of the control station in Figure 5 simply turns on the cellular radio device 3 when calling the cellular radio device 3 through the paging system. An embodiment will now be explained which necessary paging information for the cellular radio device 3, other than the message, is sent through the paging system.

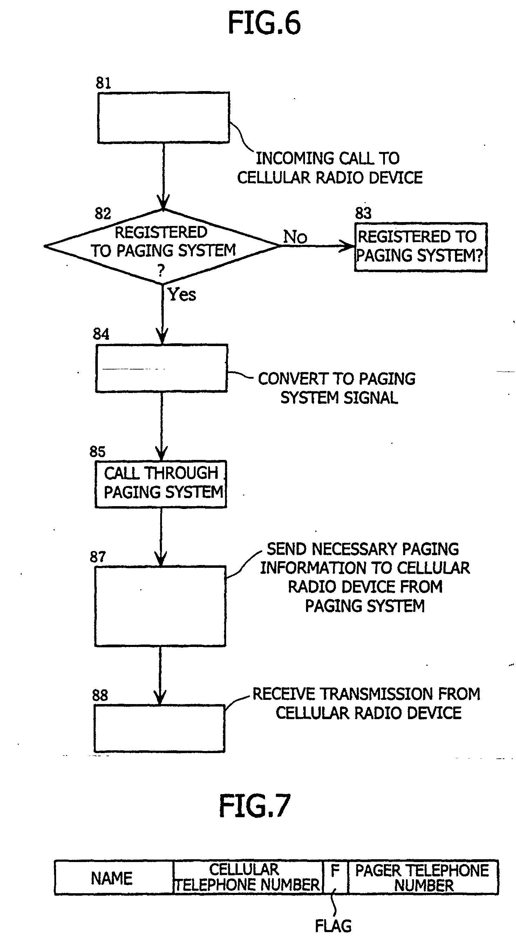

Figure 6 is a flowchart showing the flow of operations of the control station in the present embodiment; and the same numerals are used for processes which are essentially the same as in Figure 5 above.

As shown in Figures 6, when there is an incoming call to the cellular radio device 3 (81), it is determined in the control station 10 whether that cellular radio device 3 has undergone area registration to the paging system (82). When it has not been registered, processing is the same as in the case of an incoming call to a normal cellular system (83); when it is registered, the cellular radio device 3 is called through the paging system (84, 85).

Up to this point, the present embodiment is the same as the embodiment shown in Figure 5 above. In this embodiment, however, paging information necessary for a cellular radio device 3 is sent as a message on the paging system (87) after a message instructing supply of power to the cellular radio device 3 is sent and the cellular radio device 3 is called (85). This paging information is sent from the reception signal processing circuit 32 of the paging receiver pager receiver 2 to the control portion 4. Consequently, it becomes unnecessary to receive the broadcast calling channel with the cellular radio device 3 and furthermore, it becomes possible to narrow the range for the initial cell search by the cellular radio device 3 by referencing the correspondence table of the paging system area and cellular system cells, and a high-speed cell search becomes possible.

After the paging information necessary for the cellular radio device 3 is sent through the cellular system in the step 87, the cellular control station portion 10 waits to receive a response signal from the cellular radio device 3 (88), and changes to a communication channel and communicates on the cellular system.

In this way, in the radio telecommunication system according to the present invention, the terminal performs the area registration for the paging system, after being turned on, when located within the service area of the paging system, and then power to the cellular radio device is disconnected. Only the pager receiver is caused to operate and paging system standby thereby substitutes for the cellular system standby operation. Consequently, power consumption during standby of the radio telecommunication terminal 1 can be greatly reduced.

It is also possible to reduce the frequency of location registration to the cellular system and the efficiency of the system can be improved.

Furthermore, it becomes possible to perform the area registration with the paging system automatically through the cellular system and the necessity for area registration with the paging system by the user can be eliminated.

As discussed above, moreover, an incoming call to the cellular radio device 3 is signaled by sending a message instructing the supply of power to the cellular radio device 3 through the paging system, but is not limited to this. It is also possible to establish a command or a prescribed code signaling an incoming call and to use this to signal an incoming call to the cellular radio device 3.

Also, as discussed above, the pager receiver is powered on after area registration to the paging system (Step 66 in Figure 4), and subsequently the pager receiver remains powered on. However, either one may be caused not to operate in order to avoid noise.

Furthermore, as discussed above, when there is an incoming call to the cellular radio device and the call comes through the paging system, the fact that there is an incoming communication may also be displayed on the display 56 in the case where the cellular radio device 3 cannot engage in communication because of the lack of an open channel or the like.

In the radio telecommunication system, processing is necessary in the control station 10. Another embodiment of the present invention, which processing in the control station 10 is not necessary and the operations can be done by the terminal user independently, is explained here. In this case, a control station 10 wherein are established the radio calling central station portion 11 and the cellular system control station portion 12 are established as above becomes unnecessary, and the embodiment can be applied to existing radio calling systems and cellular systems. However, the telecommunication apparatus (telephone or portable telephone) includes telephone book information recording the cellular radio device numbers, information indicating whether the cellular radio device is a radio telecommunication apparatus relating to the present invention and includes a pager receiver, and the corresponding pager receiver numbers. The telecommunication apparatus also includes a function for sending to the pager a message instructing supply of power to the cellular radio device 3 in the radio telecommunication apparatus 1 relating to the present invention. Moreover, this telecommunication apparatus may naturally be the radio telecommunication apparatus 1 relating to the present invention.

Figure 7 is a drawing showing an example of the format of one record in the telephone book information. As shown in this drawing, the numbers for the cellular radio devices (cellular telephone numbers), a flag F showing whether a pager receiver is present, and the numbers for corresponding pager receivers (pager telephone number) are stored for each name.

Also, the operation of the radio telecommunication device 1 relating to the present embodiment may be the same as in the status transitional drawing shown in Figure 4 above. Moreover, area registration to the paging system by the control station 10 is not performed.

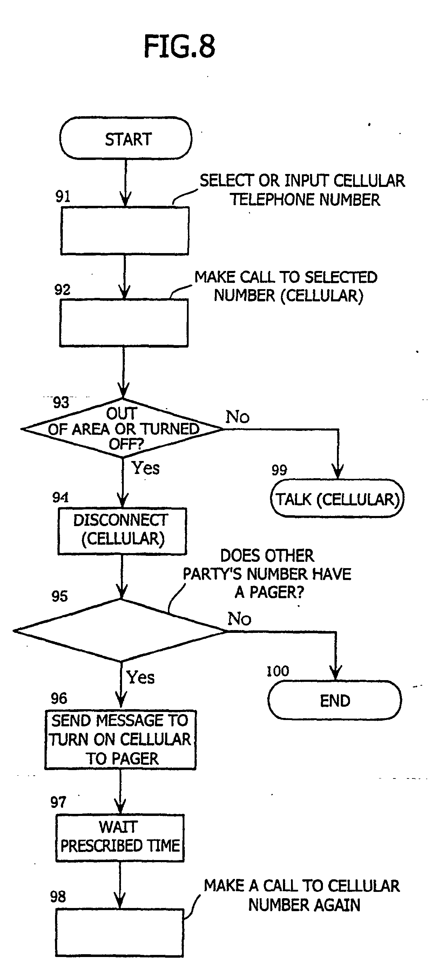

Figure 8 is a flowchart showing the operation when originating a call to the cellular radio device in the telecommunication apparatus relating to the present invention and constituted in this way.

The telephone number to be called is input by selection from the telephone book information stored in the telecommunication apparatus or by direct input of the cellular telephone number (91), and a call is originated to that cellular radio device (92). As a result, when a message is received to the effect that the cellular phone is out of range or turned off, the call to the cellular radio device is stopped (94). Meanwhile, when such a message is not received, communication is performed normally (99).

After the end of the call to the cellular radio device in the step 94, the telephone book information is referenced and it is determined whether that cellular telephone number is the telephone number of a radio telecommunication apparatus 1 relating to the present invention and including a pager receiver (95). As a result, the process ends without further action (100) when this is a telephone number for a portable terminal which does not include a pager receiver.

On the other hand, when a corresponding pager telephone number is stored, a message instructing the supply of power to the cellular radio device 3 discussed above is sent to that pager telephone number (96). As explained in relation to the Figure 4, the cellular radio device 3 is thereby powered on and the cellular radio device 3 enters the standby state.

After waiting for a prescribed period of time corresponding to the time from the instruction to power on the other party's cellular radio device 3 in the step 96 until that cellular radio device 3 enters the standby state (97), a telecommunication apparatus then makes a call once more to that cellular radio device 3 (98). Accordingly, even when the cellular radio device 3 in the radio telecommunication apparatus 1 relating to the present invention is not powered on, it becomes possible to communicate therewith. Moreover, when the radio telecommunication apparatus 1 is located out of range, the process is caused to end when these steps 92 to 98 in Figure 8 have been repeated a prescribed number of times.

In the case where the telecommunication apparatus relating to the present invention is used in this way, it becomes possible to reduce power consumption during standby of the portable terminal without the installation of special control stations such as in the radio telecommunication system.

Moreover, the telephone book information is not limited to the example in Figure 7 and the numbers of the cellular radio devices and the numbers of the corresponding pager receivers are at least recorded therein.

### INDUSTRIAL APPLICABILITY

As explained above, the radio telecommunication apparatus, radio telecommunication system, and telecommunication apparatus relating to the present invention substitute paging system standby, with a pager receiver installed in the radio telecommunication apparatus, for cellular system standby. This thereby makes possible a great reduction to power consumption during standby of the radio telecommunication apparatus. The standby time can also be greatly extended beyond that of a normal cellular radio device.

Because of including both a cellular radio device and a pager receiver, the apparatus relating to the present invention can be used as a regular cellular radio receiver and can also receive the various services of a paging system.

Furthermore, because of being in standby on the pager system, the apparatus relating to the present invention does not perform transmission during standby, whereby traffic on the system as a whole becomes low and the system capacity increases.

Furthermore, because the paging system area is wide, the number of times that location registration should be performed as a result of moving among the zones of the cellular system becomes very small.

Furthermore, while area registration on a conventional paging system should be performed by the user, it becomes possible with the present invention for area registration to be performed automatically through the cellular system.

## Claims

1. A radio telecommunication apparatus comprising:
a cellular system radio device;
a radio calling system receiver; and
a power control portion for controlling on and off of power to said cellular system radio device and the radio calling system receiver;
wherein said power control portion supplies power to the cellular system radio device in response to a signal received through the radio calling system by the radio calling system receiver.

2. A radio telecommunication apparatus comprising a cellular system radio device and a radio calling system receiver;
wherein power to the cellular system radio device is turned off after performing area registration to a radio calling system through a cellular system when the apparatus is located within a service area of the radio calling system; and
the cellular system radio device is supplied with power upon notification of an incoming call in the cellular system through the radio calling system.

3. A radio telecommunication system comprising:
a control station having functions of a cellular system control station and functions of a radio calling system central station;
cellular system base stations;
radio calling system base stations; and
a mobile radio telecommunication apparatus comprising a cellular system radio device and a radio calling system receiver;
wherein the control station determines whether a radio telecommunication apparatus has carried out area registration to the radio calling system when there is an incoming call to the cellular system radio device of the radio telecommunication apparatus; and if registered, the control station calls the radio telecommunication apparatus through the radio calling system, and if not registered, the control station calls through the cellular system; and
the radio telecommunication apparatus is adopted to turn off power to the cellular system radio device and enter into a standby state for the radio calling system after area registration is performed to the radio calling system through the cellular system, when the apparatus is located within a service area of the radio calling system.

4. The radio telecommunication system according to Claim 3, wherein the control station stores the correspondence between areas for the radio calling system and cells for the cellular system; and
area registration of the radio telecommunication apparatus to the radio calling system is automatically performed in the control station, from the results of location registration to the cellular system of the radio telecommunication apparatus and by referencing the correspondence between the area for the radio calling system and cells for the cellular system.

5. The radio telecommunication system according to Claim 3 or 4, wherein the control station also sends pager information to the radio telecommunication apparatus through the radio calling system when radio telecommunication apparatus is called through the radio calling system.

6. A telecommunication apparatus comprising means for storing a correspondence table of numbers for cellular system radio devices and numbers for radio calling system receivers with each cellular system radio device and each radio calling system receiver being installing together in one radio telecommunication apparatus, and a control portion;
wherein the control portion is adopted to send a message instructing supply of power to a cellular system radio device to a radio calling system receiver if communication is not possible as a call is made to the cellular system radio device, and after a prescribed period of time, to make a call once more to the cellular system radio device.
